Europäisches Patentamt

European Patent Office

Office européen des brevets

(11) Publication number: **0 477 935 A1**

# EUROPEAN PATENT APPLICATION

(21) Application number: **91116436.6**

(22) Date of filing: **26.09.91**

(51) Int. Cl.⁵: **A23G 1/00**

(30) Priority: **26.09.90 JP 258299/90**

(43) Date of publication of application:
**01.04.92 Bulletin 92/14**

(84) Designated Contracting States:
**CH DE ES FR GB LI NL**

(71) Applicant: **KAO CORPORATION**
**14-10, Nihonbashi Kayabacho 1-chome**
**Chuo-ku Tokyo(JP)**

(72) Inventor: **Higashioka, Hiroshi**
**8-4-503, Ohnohara 1-chome, Kamisucho**
**Kashima-gun, Ibaraki(JP)**
Inventor: **Tanaka, Yukitaka**
**Kao Doaishataku 1-104 8762-23, Doaihoncho**
**1-chome**
**Hasakimachi Kashima-gun, Ibaraki(JP)**

(74) Representative: **Hansen, Bernd, Dr.**
**Dipl.-Chem. et al**
**Hoffmann, Eitle & Partner Patent- und**
**Rechtsanwälte Arabellastrasse 4 Postfach**
**81 04 20**
**W-8000 München 81(DE)**

(54) Use of diglycerides in chocolate mixtures.

(57) A chocolate composition comprises cacao and/or cacao mass, a sweetner(s) and a fat component comprising one or more selected from cacao fat and a similar fat to the cacao fat and a diglyceride having a melting point of 25°c or below. It is improved in view of a melting property in mouth.

EP 0 477 935 A1

[Field of Industrial Application]

This invention relates to chocolates having a good meltability in mouth, a coolness and an excellent flavor of cacao. More particularly, it relates to chocolates having a soft texture and stable qualities.

[Prior Art]

Although chocolates comprise cacao fat and sweeteners as the essential components, there have been produced various chocolates containing other fats as a substitute for the cacao fat. Thus a proper product is selected from among these chocolates depending on the purpose of the usage. From the viewpoint of usage, chocolates may be roughly classified into those which are hard at ordinary temperature (for example, solid chocolates) and those which are soft at ordinary temperature (for example, enrober chocolates). There have been proposals to control the appearance and rheological properties of these chocolates by, for example, blending a liquid oil such as sesame oil or cotton seed oil (cf. "Chokoreto/Kokoa Seizo no Riron to Jissai", p. 250, Korin Shoin), producing a soft chocolate by blending plastic fats (cf. Japanese Patent Laid-Open No. 86167/1976), or improving the physico-chemical properties by controlling the blending balance of fats similar to cacao (cf. Japanese Patent Laid-Open No. 15495/1981). In general, rheological properties appropriate for each chocolate product are achieved by controlling the contents of cacao fat, fats similar thereto, liquid oils, milk fat or plastic fats. However there has been developed no chocolate product which is excellent in meltability in mouth and cacao flavor and maintains a soft texture (softness in mouth) below ordinary temperature and stable qualities (blooming resistance, oil-off resistance, etc.) at a temperature above ordinary temperature.

[Summary of the Invention]

In order to solve the aforesaid problems, the present inventors have conducted extensive studies. As a result, they have found out that chocolates having a soft texture below ordinary temperature and stable qualities above ordinary temperature can be obtained by using cacao fat and/or fat(s) similar thereto together with a diglyceride having a melting point of 25°C or below as fat components, thus completing the present invention.

Accordingly, the present invention provides chocolates comprising cocoa and/or cacao mass, sweeteners and fats, characterized in that fat components essentially comprises cacao fat and/or fat(s) similar thereto and a diglyceride having a melting point of 25°C or below optionally together with milk fat, if required, as an additional component.

In other words, the chocolate compostion comprises cacao and/or cacao mass, a sweetner(s) and a fat component comprising one or more selected from cacao fat and a similar fat to the cacao fat and a diglyceride having a melting point of 25°c or below. It is improved in view of a melting property in mouth.

The fat component further comprises milk fat. It is preferable that the fat component comprises 98 to 50 percent by weight of cacao fat and/or a similar fat to the cacao fat and 2 to 50 percent by weight of a diglyceride a having a melting point of 25°c or below.

In manufacturing, cacao beans are roasted and pulverized to obtain cacao mass including 50% of oily matter. The cacao mass is pressed to separate cacao fat including 100% of oil from cacao powder including 20% of oil. Cacao mass is cacao beans rasted and pulverized. Cacao fat and cacao butter are equivalent to each other, indicating oily matter obtained by pressing and extracting cacao mass. Fat similar thereto is, what so called, substitutes of fat and oil for cacao fat to be improved in costs and quality. In general, chocolate includes cacao mass and cacao fat as a basis.

The term, a sililar fat to the cacao fat, includes for example a fraction of natural oils and fats such as palm fid fraction having a melting point of 32. 7°c and an interesterification product of the fraction. It is called cacao butter equivalent or cacao butter substitute. It melts in the same way as cacao fat.

The diglyceride is a diglyceride product. For example, soybean oil includes 72 wt.% of cis-unsaturated diglycerides, rapeseed oil, 80 wt.% and rice bran oil, 56 wt. %. The fatty acid composition is shown based on the product.

In the inveniton every conventional edible sweeter can be used, such as granulated sugar, sorbitol and sucrose.

As the diglyceride to be used in the present invention, any diglyceride may be selected so long as it has a melting point of 25°C or below. It is particularly preferable to use diglycerides (glycerol difatty acid esters) having a melting point of from -20 to 15°C. As the constituting fatty acids of these diglycerides, unsaturated fatty acids having 16 to 22 carbon atoms are preferable. The content of these fatty acids may be preferably 70% by weight or more, still preferably 80% by weight or more, based on the fatty acid residues in the diglycerides. It is particularly preferable to use di-unsaturated diglycerides. Among all, di-cis-unsaturated diglycerides are preferable and the content thereof may be preferably 50% by weight or more, still preferably 70% by weight or more, based on the diglycerides.

The diglyceride having a melting point of 25°C or below to be used in the present invention may be obtained by transesterifying a mixture comprising one or more fats selected from among natural fats (for example, vegetable oils such as safflower oil, rapeseed oil, corn oil, soybean oil, cotton seed oil, olive oil or palm oil, animal fats such as lard, beef tallow, fish oil or butter and those obtained by hardening, fractionating or random-transesterifying the same) and glycerol in the presence of a hydroxide of an alkali metal and/or an alkaline earth metal. Alternately, a mixture comprising a fatty acid composition of a high unsaturated fatty acid level with glycerol may be esterified.

In the present invention, it is preferable that the content of the cacao fat and/or fat(s) similar thereto range from 50 to 98% by weight while that of the diglyceride range from 2 to 50% by weight, based on the total fat components. Further, milk fat may be contained as an additional component, if required. When the content of the diglyceride having a melting point of 25°C or below is less than 2% by weight, the obtained chocolate is poor in soft texture and stable qualities. When it exceeds 50% by weight, on the other hand, the obtained chocolate cannot show an excellent flavor of cacao.

The chocolates of the present invention may be produced by any known method without restriction.

The chocolates of the present invention are applicable to any purposes including solid chocolates and enrober chocolates.

The chocolate of the present invention, which comprises a diglyceride having a melting point of 25°C or below, has a soft texture below ordinary temperature and stable qualities above ordinary temperature. Further, it shows a good meltability in mouth and thus gives an enriched flavor of chocolate and a crisp after taste.

[Examples]

To further illustrate the present invention, and not by way of limitation, the following Examples will be given, wherein all parts are by weight.

Production Example 1: Production of diglycerides

Fatty acids originating from soybean oil, rapeseed oil and rice bran oil were treated in the following manner to thereby give diglycerides (1) to (3) which were employed as samples in the following Examples.

500 parts of each fatty acid, 80 parts of purified glycerol and 100 parts of a lipase preparation originating from Mucor miehei were mixed together and esterified with stirring at 65°C under reduced pressure for 8 hours. The obtained product was freed from the acid in a molecular distillation device, thus obtaining 400 to 430 parts of an esterified product.

400 parts of the above product was then subjected to column chromatography by using 2,000 parts of silica gel, thus obtaining 310 to 340 parts of a diglyceride of each of the aforesaid fatty acids.

Table 1 shows the analytical data of each diglyceride.

Table 1: Analytical data of diglycerides

| Diglyceride | | (1) | (2) | (3) |
|---|---|---|---|---|
| Starting fatty acid | | soybean oil | rapeseed oil | rice bran oil |
| m. p. (°C) | | 12. 1 | 8. 4 | 28. 3 |
| Fatty acid composition (%) *1: | $C_{16}$ | 9. 6 | 5. 5 | 21. 6 |
| | $C_{18}$ | 3. 6 | 1. 8 | 1. 9 |
| | $C_{18=1}$ | 36. 2 | 59. 2 | 39. 3 |
| | $C_{18=2}$ | 42. 7 | 20. 7 | 33. 8 |
| | $C_{18=3}$ | 5. 8 | 9. 8 | 1. 8 |

Note

*1: $C_{16}$:   saturated fatty acid having 16 carbon atoms.

   $C_{18}$:   saturated fatty acid having 18 carbon atoms.

   $C_{18=1}$:  unsaturated fatty acid having 18 carbon

       atoms and one unsaturated bond.

   $C_{18=2}$:  unsaturated fatty acid having 18 carbon

       atoms and two unsaturated bonds.

   $C_{18=3}$:  unsaturated fatty acid having 18 carbon

       atoms and three unsaturated bonds.

Examples 1 and 2 and Comparative Examples 1 to 3

A chocolate of each formulation listed in Table 2 was produced by a common method. The total fat content of this system was 32% by weight.

4

Table 2

(part)

|  | Ex. 1 | Ex. 2 | Comp. Ex. 1 | Comp. Ex. 2 | Comp. Ex. 3 |
|---|---|---|---|---|---|
| granulated sugar | 45 | 45 | 45 | 45 | 45 |
| whole fat milk powder | 15 | 15 | 15 | 15 | 15 |
| cacao mass | 25 | 25 | 25 | 25 | 25 |
| cacao fat | 6 | 6 | 15 | 6 | 6 |
| diglyceride (1) | 9 (28) |  |  |  |  |
| diglyceride (2) |  | 9 (28) |  |  |  |
| diglyceride (3) |  |  |  | 9 (28) | 9 (28) |
| soybean oil |  |  | 0. 3 |  | 0. 3 |
| lecithin | 0. 3 | 0. 3 |  | 0. 3 |  |

Note: Each figure given in parenthesis is expressed in %

by weight based on the total fat components.

The softness, stability in qualities and flavor of each

chocolate thus obtained were evaluated by the following

methods.

Table 3 summarizes the results.

<Evaluation of chocolate>

Softness (hardness):

After the production, each chocolate sample was stored at 20°C for a month and then the hardness thereof was measured. The hardness is determined in terms of a force of pressure measured with Leometer when an apperture shaped in an arrowhead being 12 mm long and 10 mm wide has penetrated into a sample 3 mm deep.

Stability in qualities:

Each chocolate sample was stored at 18°C and 30°C (each maintained for 12 hours) for a month and then the conditions thereof (oil-off and blooming) were observed.

Flavor:

Each chocolate sample stored at 20°C for a month was organoleptically evaluated.

The stability in qualities and the flavor of each sample were evaluated based on the following criteria relative to a standard rating (±) of a comparative chocolate sample comprising cacao fat alone (Comparative Example 1) :

+ + : very good.

+ : good.

±: equivalent to cacao fat.

-: poor

--: very poor.

Stability and flavor were obserbed by 20 expert panelists in line with the following categories:

| remarks | score |
|---|---|
| + + : | 9 to 10 |
| + : | 7 to 8 |
| ±: | 5 to 6 |
| -: | 3 to 4 |
| --: | 1 to 2 |

Anti-blooming effect was determined for stability in terms of the number of treatment cycles taken until blooming had been found. One treatment cycle comprised (1) 30°c for 11 hours, (2) temperature shifting for 1 hour, (3) 18°c for 11 hours and (4) temperature shifting for 1 hour. A test expert observes, after the step at 18°c for 11 hours, whether or not blooming takes place. Results are shown in terms of the number of cycles when blooming has been observed, corresponding to the number of days when a sample has been stored until blooming.

Table 3

| Evaluation of chocolates | | | |
|---|---|---|---|
| | Hardness (g) | Stability in qualities | Flavor |
| Ex. 1 | 880 | + + | + |
| Ex. 2 | 870 | + + | + |
| Comp. Ex. 1 | 1720 | ± | ± |
| Comp. Ex. 2 | 1250 | ± | + |
| Comp. Ex. 3 | 1140 | - | -- |

| | anti-blooming effect | Flavor |
|---|---|---|
| Ex. 1 | larger than 30 | 7.6 |
| Ex. 2 | larger than 30 | 7.8 |
| Comp. Ex. 1 | 8 | 5.6 |
| Comp. Ex. 2 | 13 | 6.8 |
| Comp. Ex. 3 | 3 | 1.7 |

As Table 3 shows, chocolates comprising diglycerides having a melting point of 25°C or below (Examples 1 and 2) were superior in softness to the conventional soft chocolate comprising a liquid oil (Comparative Example 3) and showed stable qualities without suffering from any oil-off or blooming. Further, the former products gave a good cacao taste excellent in perristence.

Example 3

By using a moderate melting point fraction of palm oil as a substitute for cacao fat, a chocolate of the following formulation was produced.

The chocolate thus obtained was evaluated in the same manner as the one described in Examples 1 and 2. As a result, it sustained stable qualities and showed a soft texture and an excellent flavor of cacao after storing for a month.

```
<Formulation>

        granulated sugar                  45 (parts)

        whole fat milk powder             15

        cacao mass                        25

        cacao fat                               5

        palm mid fraction                       5

        diglyceride (2)                    5

        lecithin                               0. 3
```

Example 4

A common chocolate base of the following formulation A was kneaded together with a W/O emulsion of the following formulation B to prepare a chocolate containing an aqueous component.

The chocolate thus obtained had a soft texture and a good flavor of milk. When the diglyceride (2) was replaced by rapeseed oil, the obtained chocolate did not have the desired qualities. In contrast, the chocolate obtained in this Example had a uniform texture and a high resistance against blooming and remained stable in moisture content after the lapse of time.

```
<Formulation A>

        granulated sugar                  45 (parts)

        whole fat milk powder              7

        cacao mass                        25

        lecithin                               0. 3
```

```
<Formulation B>

        condensed milk                        8 (parts)

        cacao fat                             5

        diglyceride (2)                  10
```

7

**Claims**

1. A chocolate composition comprising cacao and/or cacao mass, (a) sweetener(s) and a fat component comprising one or more selected from cacao fat and a fat similar to cacao fat, and a diglyceride having a melting point of 25°c or below.

2. The composition as claimed in Claim 1, in which the fat component further comprises milk fat.

3. The composition as claimed in Claim 1, in which the fat component comprises 98 to to 50 percent by weight of cacao fat and/or a fat similar to cacao fat and 2 to 50 percent by weight of a diglyceride having a melting point of 25°c or below.

# EUROPEAN SEARCH REPORT

**European Patent Office**

**Application Number**

**EP 91 11 6436**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 378 893 (KAO CORPORATION)<br>* claims 1-5 *<br>– – – | 1,3 | A 23 G 1/00 |
| A | EP-A-0 188 122 (THE PROCTER & GAMBLE COMPANY)<br>* abstract * * page 11, lines 27 - 33 * * page 33 *<br>– – – | 1-3 | |
| A | EP-A-0 196 210 (KAO CORPORATION)<br>* page 9, lines 18 - 22 *<br>– – – | 1-3 | |
| P,X | EP-A-0 426 155 (KAO CORPORATION)<br>* the whole document *<br>– – – – – | 1-3 | |

TECHNICAL FIELDS
SEARCHED (Int. Cl.5)

A 23 G
A 23 D

The present search report has been drawn up for all claims

| Place of search | Date of completion of search | Examiner |
|---|---|---|
| Berlin | 13 November 91 | ALVAREZ Y ALVAREZ C |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

& : member of the same patent family, corresponding
document